# EUROPÄISCHE PATENTSCHRIFT

(11) **EP 1 592 572 B1**
(45) Veröffentlichungstag und Bekanntmachung des Hinweises auf die Patenterteilung: **16.03.2011**
(21) Anmeldenummer: 04700664.8
(22) Anmeldetag: 08.01.2004
(51) Int. Cl.: B60J 7/14

(54) **KRAFTFAHRZEUG MIT EINEM VERSENKBAREN DACH**
MOTOR VEHICLE WITH A RETRACTABLE ROOF
VEHICULE AUTOMOBILE A TOIT ESCAMOTABLE

(30) Priorität: 16.01.2003 DE 20300648 U
(43) Veröffentlichungstag der Anmeldung: 09.11.2005
(73) Patentinhaber: Wilhelm Karmann GmbH, 49084 Osnabrück (DE)
(72) Erfinder: NEUBRAND, Frank, West Bloomfield, MI 48322 (DE)
(74) Vertreter: Kronthaler, Schmidt & Coll.
(86) Internationale Anmeldenummer: PCT/DE2004/000011
(87) Internationale Veröffentlichungsnummer: WO 2004/065156

(56) Entgegenhaltungen:
- EP-A- 0 811 518
- EP-A- 0 835 780
- EP-A- 1 241 034
- EP-A- 1 302 351
- WO-A-03/084773
- WO-A-03/091054

## Beschreibung

Die vorliegende Erfindung betrifft ein Kraftfahrzeug mit einem versenkbaren Dach mit mindestens zwei in einer gemeinsamen, den Fahrgastinnenraum überdeckenden Schließstellung hintereinander angeordneten, als starre Schale ausgeführten und über Gelenkverbinder miteinander verbundenen Dachteilstücken, die aus genannter Schließstellung in eine Öffnungstellung unter Ablage in einem heckseitigen Verdeckaufnahmeraum überführbar sind, in der das bzw. das jeweils vordere Dachteilstück unter dem bzw. dem jeweils hinteren Dachteilstück angeordnet ist und die Außenflächen aller Dachteilstücke nach oben weisen.

Ein Kraftfahrzeug (Cabriolet-Fahrzeug) der eingangs genannten Art ist aus der DE 196 42 154 A1 und der EP 0 835 780 A1 bekannt. Das darin offenbarte Dach weist drei Dachteilstücke auf, wobei das vordere und das mittlere Dachteilstück über einen jeweiligen ersten bzw. zweiten Gelenkverbinder mit dem jeweils hinteren Dachteilstück verbunden ist. Der erste Gelenkverbinder ist dabei von einem zwei im wesentlichen parallele Steuerhebel aufweisenden Viergelenk gebildet.

Die bekannten versenkbaren Dächer weisen jedoch den Nachteil auf, daß alle drei Dachteilstücke mit einem relativ großen Abstand parallel zueinander liegen, wodurch ein hohes Dachpaket resultiert.

Der Erfindung liegt somit die Aufgabe zugrunde, den vorgenannten Nachteil zu beseitigen, zumindest aber zu reduzieren.

Erfindungsgemäß wird diese Aufgabe bei dem gattungsgemäßen Kraftfahrzeug dadurch gelöst, daß mindestens ein Gelenkverbinder zwei ein Viergelenk (A, B, C, D) bildende Steuerhebel umfaßt, die einenends mit dem bzw. dem jeweils hinteren Dachteilstück drehbar verbunden sind und anderenends an einer Lagerplatte drehbar angeordnet sind, wobei die Lagerplatte an dem bzw. dem jeweils vorderen Dachteilstück oder einer mit dem bzw. dem jeweils vorderen Dachteilstück fest verbundenen Dachteilstückaufnahme beweglich angeordnet ist.

Insbesondere kann dabei vorgesehen sein, daß die Lagerplatte mit dem vorderen Dachteilstück bzw. der Dachteilstückaufnahme drehbar verbunden ist.

Vorteilhafterweise ist zwischen einem der Steuerhebel des viergelenks und dem vorderen Dachteilstück bzw. der Dachteilstückaufnahme ein Steuerlenker angeordnet.

Vorteilhafterweise ist der Steuerlenker einenends an einem der Steuerhebel des Viergelenks und anderenends an dem bzw. dem jeweils vorderen Dachteilstück drehbar gelagert.

Günstigerweise weist der Steuerhebel einen abgewinkelten Fortsatz auf und ist der Steuerlenker an dem Fortsatz drehbar gelagert.

Gemäß einer weiteren besonderen Ausführungsform der Erfindung kann vorgesehen sein, daß die Lage der Lagerplatte relativ zum bzw. zum jeweils vorderen Dachteilstück bzw. zur Dachteilstückaufnahme während der Bewegung aus der Öffnungs- in die Schließstellung veränderlich ist.

Schließlich kann insbesondere vorgesehen sein, daß die Lagerplatte ihre Winkelstellung zum bzw. zum jeweils vorderen Dachteilstück bzw. zur Dachteilstückaufnahme während der Bewegung aus der Öffnungs- in die Schließstellung verändert.

Der Erfindung liegt die überraschende Erkenntnis zugrunde, daß durch das Vorsehen einer Viergelenkanordnung und einer Lagerplatte die Dachteilstücke in der Öffnungsstellung (Lagerstellung) an ihren jeweiligen vorderen Kanten gegenüber ihren jeweiligen hinteren Kanten einen verringerten Abstand zueinander aufweisen. Dadurch nimmt das resultierende Dachpaket einen insgesamt weiter verringerten Raum, insbesondere hinsichtlich der Ablagehöhe, ein.

Als weitere Vorteile sind zu nennen:
- Aufgrund einer Zwangssteuerung ist kein separater Antrieb notwendig.
- Eine zwangsgeführte Dachablage vermeidet eine Berührung der Dachteilstücke bei geringstem Dachteilstückabstand.
- Geringer zusätzlicher Aufwand an Kinematik und Montage.

Weitere Merkmale und Vorteile der Erfindung ergeben sich aus den Ansprüchen und der nachstehenden Beschreibung, in der ein Ausführungsbeispiel anhand der schematischen Zeichnungen im einzelnen erläutert ist. Dabei zeigt:
- Figur 1: eine Seitenansicht eines Heckbereiches eines Kraftfahrzeugs mit einem drei Dachteilstücke aufweisenden Dach gemäß einer besonderen Ausführungsform der Erfindung einer Bewegungsphase während der Bewegung aus einer Öffnungs- in eine Schließstellung oder umgekehrt;
- Figur 2: einen Ausschnitt des Daches von Figur 1 in Schließstellung;
- Figur 3: eine Detailansicht von Figur 2; und
- Figuren 4 - 6: Detailansichten ähnlich wie Figur 3 in unterschiedlichen Bewegungsphasen.

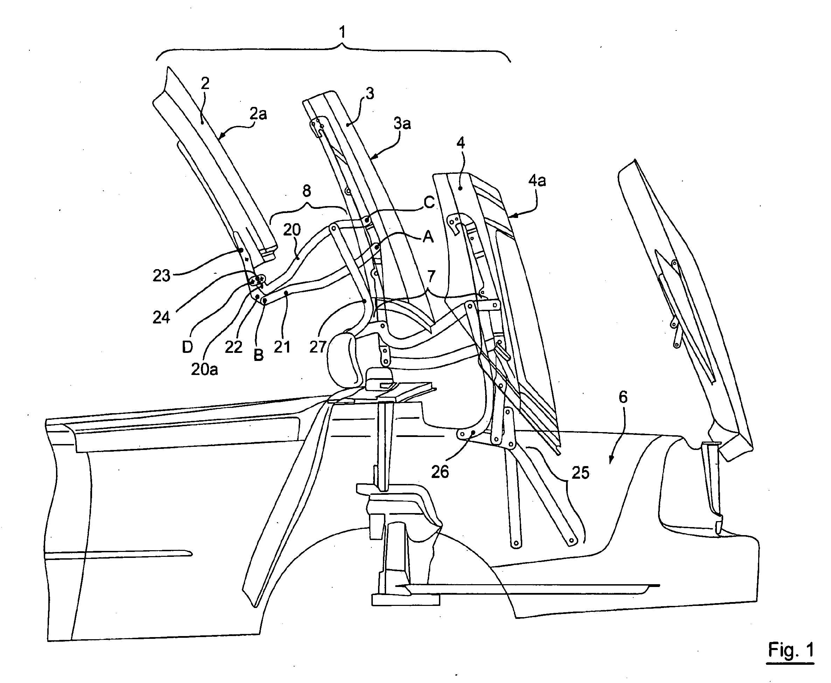

Wie sich aus der Figur 1 ergibt, weist ein versenkbares Dach 1 drei Dachteilstücke 2, 3 und 4 auf. Diese sind in einer gemeinsamen, den Fahrgastinnenraum (nicht gekennzeichnet) überdeckenden Schließstellung (nicht gezeigt) hintereinander angeordnet, als starre Schale ausgeführt, über Gelenkverbinder 7 und 8 miteinander verbunden und aus genannter Schließstellung in eine Öffnungsstelle (nicht gezeigt) unter Ablage in einem heckseitigen Verdeckaufnahmeraum 6 überführbar, in der das jeweils vordere Dachteilstück 2 bzw. 3 unter dem jeweils hinteren Dachteilstück 3 bzw. 4 angeordnet ist und die Außenflächen 2a, 3a und 4a aller Dachteilstücke 2, 3 und 4 nach oben weisen. In der Figur 1 befindet sich das versenkbare Dach 1 in einer Bewegungsphase während der Bewegung aus der Öffnungs- in die Schließstellung bzw. umgekehrt. Der Gelenkverbinder 8 umfaßt zwei ein Viergelenk A, B, C, D bildende Steuerhebel 20 und 21, die einenends mit dem hinteren Dachteilstück 3 drehbar verbunden sind und anderenends an einer Lagerplatte 22 drehbar angeordnet sind, wobei die Lagerplatte 22 an einer mit dem vorderen Dachteilstück 2 fest verbundenen Dachteilstückaufnahme 23 drehbeweglich angeordnet ist. Die Dachteile 2, 3 und 4 werden somit über die Steuerhebel 20 und 21 geführt, welche zum einen zwischen dem Gelenkverbinder 8 und dem dahinter angeordneten Gelenkverbinder 7 eine Zwangssteuerung bewirken. Zum anderen wird über einen einenends an einem Hauptlager 25 angelenkten und anderenends an dem zwischen den hinteren beiden Dachteilstücken 3 und 4 befindlichen Gelenkverbinder 7 angelenkten Koppelhebel 26 und einen einenends an dem zwischen den hinteren beiden Dachteilstücken 3 und 4 befindlichen Gelenkverbinder 7 und anderenends an dem zwischen den vorderen beiden Dachteilstücken 2 und 3 befindlichen Gelenkverbinder 8 angelenkten zweiten Koppelhebel 27 die Zwangsführung aller drei Dachteilstücke 2, 3 und 4 vervollständigt.

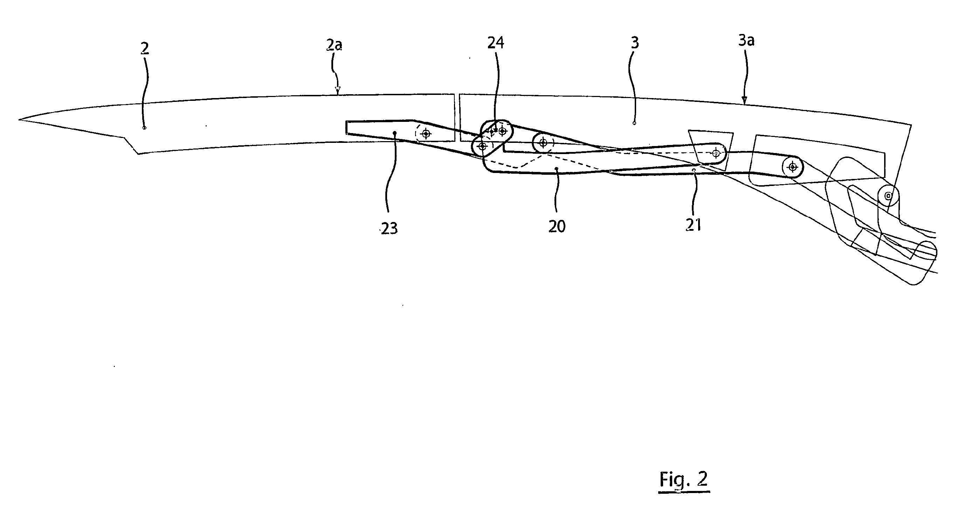

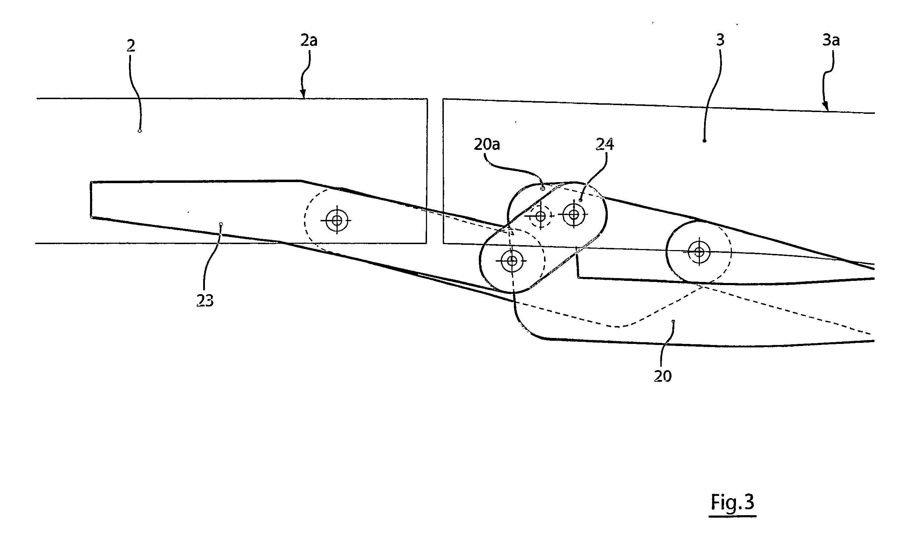

Wie sich aus den Figuren 2 und 3 ergibt, sind die beiden Steuerhebel 20 und 21 des Gelenkverbinders 8 an ihrem dem vorderen Dachteilstück 2 zugewandten Ende an der Lagerplatte 22 drehbar angeordnet. Diese Lagerplatte 22 wiederum ist schwenkbar an einer Dachteilstückaufnahme 23 gelagert. An dieser Dachteilstückaufnahme 23 wird das vordere Dachteilstück 2 fest aufgenommen. Zwischen dem Steuerhebel 20 und der Dachteilstückaufnahme 23 ist ein beidenends drehbar gelagerter Steuerlenker 24 angeordnet. Der Steuerhebel 20 besitzt an seinem der Lagerplatte 22 zugewandten Ende einen abgewinkelten Fortsatz 20a, an welchem der Steuerlenker 24 angelenkt ist.

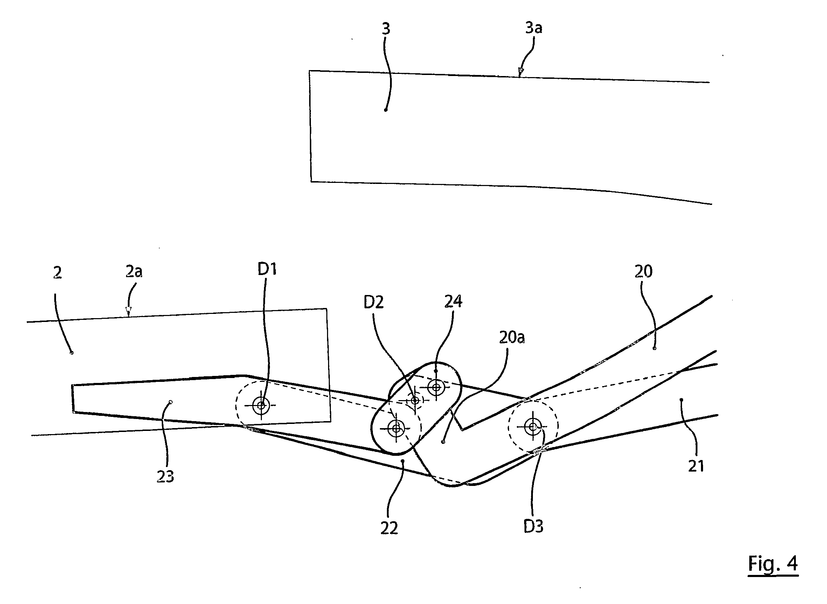

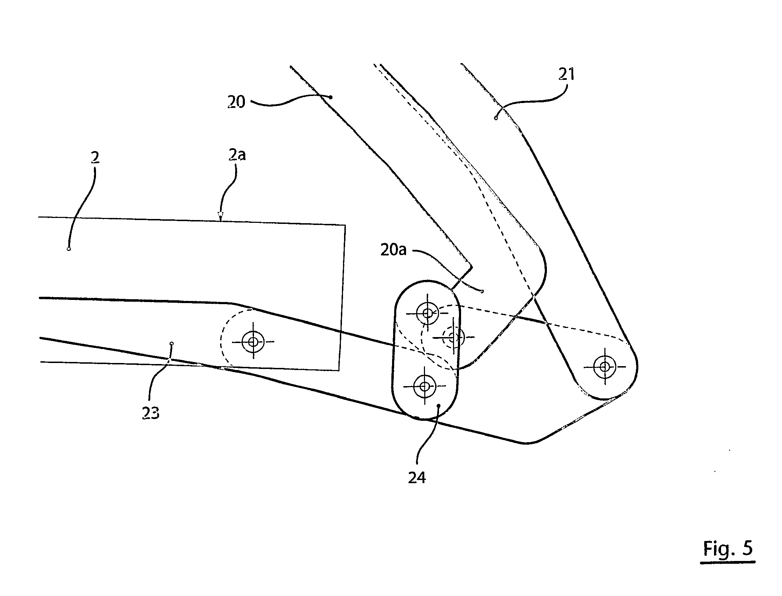

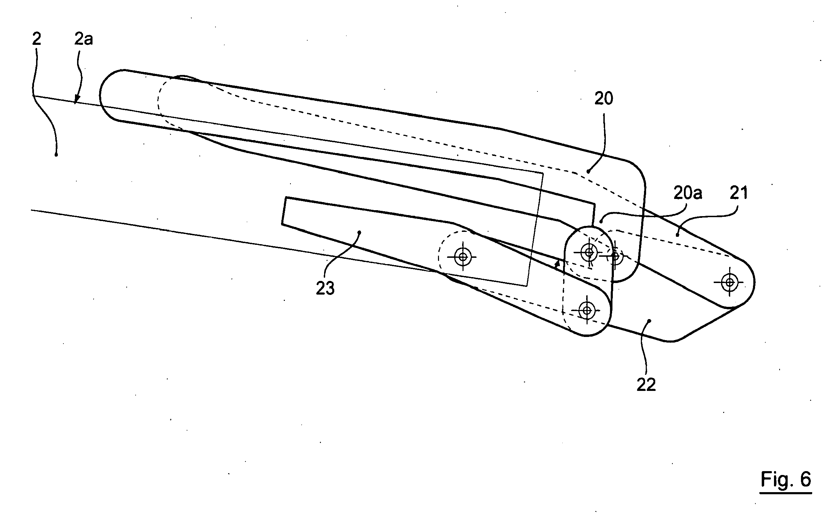

Wie sich unter Bezugnahme auf die Figuren 4 bis 6 ergibt, wird der Steuerlenker 24 über den Steuerhebel 20 verschwenkt, sobald die beiden vorderen Dachteilstücke 2 und 3 über den Gelenkverbinder 8 zueinander bewegt werden. Da sich der Steuerlenker 24 an der Dachteilstückaufnahme 23 abstützt, wird durch die Schwenkbewegung die Stellung der Lagerplatte 22 relativ zur Dachteilstückaufnahme 23 verändert. Dies ergibt sich insbesondere anhand eines Vergleiches der Figuren 2 und 6. In Figur 6 ist dazu die Winkeländerung und Winkeländerungsrichtung durch einen Pfeil gekennzeichnet.

Aufgrund der Tatsache, daß über den Gelenkverbinder 8 die Lagerplatte 22 zumindest annähernd parallel zum hinteren Dachteilstück 3 verschoben wird, wird durch die Winkeländerung von Lagerplatte 22 zu Dachteilstückaufnahme 23 das vordere Dachteilstück 2 derart zum hinteren Dachteilstück 3 bewegt, daß in der Ablagestellung der Abstand der jeweils vorderen Kanten der Dachteilstücke 2 und 3 gegenüber dem Abstand der jeweils hinteren Kanten verringert ist. Schon kleine Winkeländerungen bewirken aufgrund der Dachteilstückerstreckung bedeutende Lageänderungen der vorderen Kante des vorderen Dachteilstücks 2.

Durch eine derartige Ablage ist das abgelegte Dachpaket zumindest in seinem vorderen Bereich in seiner Höhe insgesamt verkleinert und nimmt es im Verdeckaufnahmeraum gegenüber einem in herkömmlicher Weise abgelegten Dach mit parallel zueinander liegenden Dachteilstücken weniger Raum ein.

### Bezugszeichenliste

- 1: Dach
- 2, 3, 4: Dachteilstücke
- 2a, 3a, 4a: Außenflächen
- 6: Verdeckaufnahmeraum
- 7: Gelenkverbinder
- 8: Gelenkverbinder
- 20: Steuerhebel
- 20a: Fortsatz
- 21: Steuerhebel
- 22: Lagerplatte
- 23: Dachteilstückaufnahme
- 24: Steuerlenker
- 25: Hauptlager
- 26: Koppelhebel
- 27: Koppelhebel

- A, B, C, D: Drehpunkte
- D1, D2, D3: Drehpunkte

## Patentansprüche

1. Kraftfahrzeug mit einem versenkbaren Dach (1) mit mindestens zwei in einer gemeinsamen, den Fahrgastinnenraum überdeckenden Schließstellung hintereinander angeordneten, als starre Schale ausgeführten und über Gelenkverbinder (7, 8) miteinander verbundenen Dachteilstücken (2, 3, 4), die aus genannter Schließstellung in eine Öffnungstellung unter Ablage in einem heckseitigen Verdeckaufnahmeraum (6) überführbar sind, in der das bzw. das jeweils vordere Dachteilstück (2, 3) unter dem bzw. dem jeweils hinteren Dachteilstück (3, 4) angeordnet ist und die Außenflächen (2a, 3a, 4a) aller Dachteilstücke (2, 3, 4) nach oben weisen,
**dadurch gekennzeichnet, daß**
mindestens ein Gelenkverbinder (8) zwei ein Viergelenk (A, B, C, D) bildende Steuerhebel (20, 21) umfaßt, die einenends mit dem bzw. dem jeweils hinteren Dachteilstück (3) drehbar verbunden sind und anderenends an einer Lagerplatte (22) drehbar angeordnet sind, wobei die Lagerplatte (22) an dem bzw. dem jeweils vorderen Dachteilstück oder einer mit dem bzw. dem jeweils vorderen Dachteilstück (2) fest verbundenen Dachteilstückaufnahme (23) beweglich angeordnet ist.

2. Kraftfahrzeug nach Anspruch 1, **dadurch gekennzeichnet, daß** die Lagerplatte (22) mit dem vorderen Dachteilstück bzw. der Dachteilstückaufnahme (23) drehbar verbunden ist.

3. Kraftfahrzeug nach Anspruch 1 oder 2, **dadurch gekennzeichnet, daß** zwischen einem der Steuerhebel (20) des Viergelenks und dem vorderen Dachteilstück bzw. der Dachteilstückaufnahme (23) ein Steuerlenker (24) angeordnet ist.

4. Kraftfahrzeug nach Anspruch 3, **dadurch gekennzeichnet, daß** der Steuerlenker (24) einenends an einem der Steuerhebel (20) des Viergelenks und anderenends an dem bzw. dem jeweils vorderen Dachteilstück (2) drehbar gelagert ist.

5. Kraftfahrzeug nach Anspruch 4, **dadurch gekennzeichnet, daß** der Steuerhebel (20) einen abgewinkelten Fortsatz (20a) aufweist und der Steuerlenker (24) an dem Fortsatz (20a) drehbar gelagert ist.

6. Kraftfahrzeug nach einem der vorangehenden Ansprüche, **dadurch gekennzeichnet, daß** die Lage der Lagerplatte (22) relativ zum bzw. zum jeweils vorderen Dachteilstück bzw. zur Dachteilstückaufnahme (23) während der Bewegung aus der Öffnungs- in die Schließstellung veränderlich ist.

7. Kraftfahrzeug nach Anspruch 6, **dadurch gekennzeichnet, daß** die Lagerplatte (22) ihre Winkelstellung zum bzw. zum jeweils vorderen Dachteilstück bzw. zur Dachteilstückaufnahme (23) während der Bewegung aus der Öffnungs- in die Schließstellung verändert.

## Claims

1. A vehicle comprising a retractable roof (1) with at least two roof sections (2, 3, 4) formed as rigid shells and connected to each other via hinge connectors (7, 8), said roof sections being arranged one behind the other and cover the passenger compartment in a common closing position, and being transformable from said closing position to an opening position, wherein they are deposited in a rear side roof receiving space (6) with the respectively the respective front roof section (2, 3) being arranged beneath the respectively the respective rear roof section (3, 4), and the outer surfaces facing upwards in said opening position
**characterized in that**
at least one hinge connector (8) comprises two control levers (20, 21) forming a four-bar joint (A, B, C, D), which control levers are rotatably connected to the respectively to the respective rear roof section (3) at their one end, and are rotatably arranged at a bearing plate (22) at their other end, wherein the bearing plate (22) is movably arranged at the respectively at the respective front roof section or at a roof section retainer (23) that is fixedly connected to the respectively to the respective front roof section (2).

2. The vehicle according to claim 1, **characterized in that** the bearing plate (22) is rotatable connected to the front roof section and the roof section retainer (23), respectively.

3. The vehicle according to claim 1 or 2, **characterized in that** a control bar (24) is arranged between one of the control levers (20) of the four-bar joint and the front roof section and the roof section retainer (23), respectively.

4. The vehicle according to claim 3, **characterized in that** the control bar (24) is rotatable supported on one of the control levers (20) of the four-bar joint at its one end, and rotatable supported on the respectively on the respective front roof section (2) at its other end.

5. The vehicle according to claim 4, **characterized in that** the control lever (20) is provided with angeled extension (20a), and the control bar (24) is rotatable supported on the extension (20a).

6. The vehicle according to one of the preceding claims, **characterized in that** the position of the bearing plate (22) relative to the respectively to the respective front roof section and the roof section retainer (23), respectively, is changeable while moving from the opening position to the closing position.

7. The vehicle according to claim 6, **characterized in that** the bearing plate (22) changes its angular position to the respectively to the respective front roof section and the roof section retainer (23), respectively, while moving from the opening position to the closing position.

## Revendications

1. Véhicule automobile comprenant un toit escamotable (1) avec au moins deux parties de toit (2, 3, 4) aménagées l'une derrière l'autre dans une position de fermeture commune recouvrant l'habitacle de passagers, se présentant sous la forme d'une coque rigide et raccordées l'une à l'autre par des raccords articulés (7, 8), lesquelles parties de toit peuvent être transférées de la position de fermeture citée dans une position d'ouverture par rangement dans un espace de logement de capote arrière (6), dans lequel la partie de toit ou la partie de toit avant respective (2, 3) est aménagée en dessous de la partie de toit ou la partie de toit arrière respective (3, 4) et les surfaces externes (2a, 3a, 4a) de toutes les parties de toit (2, 3, 4) sont tournées vers le haut,
**caractérisé en ce que**
au moins un raccord articulé (8) comprend deux leviers de commande (20, 21) formant un quadrilatère articulé (A, B, C, D), qui sont, à une extrémité, raccordés à rotation à la partie de toit ou à la partie de toit arrière respective (3) et, à l'autre extrémité, raccordés à rotation à une plaque d'appui (22), laquelle plaque d'appui (22) est aménagée de manière mobile sur la partie de toit ou la partie de toit avant respective ou sur un logement de partie de toit (23) raccordé de manière fixe à la partie de toit ou la partie de toit avant respective (2).

2. Véhicule automobile selon la revendication 1, **caractérisé en ce que** la plaque d'appui (22) est raccordée à rotation à la partie de toit avant ou au logement de partie de toit (23).

3. Véhicule automobile selon la revendication 1 ou 2, **caractérisé en ce qu'**une bielle de commande (24) est aménagée entre l'un des leviers de commande (20) du quadrilatère articulé et la partie de toit avant ou le logement de partie de toit (23).

4. Véhicule automobile selon la revendication 3, **caractérisé en ce que** la bielle de commande (24) est montée à rotation, à une extrémité, sur l'un des leviers de commande (20) du quadrilatère articulé et, à l'autre extrémité, sur la partie de toit ou la partie de toit avant respective (2).

5. Véhicule automobile selon la revendication 4, **caractérisé en ce que** le levier de commande (20) présente un prolongement coudé (20a) et la bielle de commande (24) est montée à rotation sur le prolongement (20a).

6. Véhicule automobile selon l'une quelconque des revendications précédentes, **caractérisé en ce que** la position de la plaque d'appui (22) est variable par rapport à la partie de toit ou la partie de toit avant respective ou au logement de partie de toit (23) pendant le déplacement de la position d'ouverture à la position de fermeture.

7. Véhicule automobile selon la revendication 6, **caractérisé en ce que** la plaque d'appui (22) modifie sa position angulaire par rapport à la partie de toit ou la partie de toit avant respective ou au logement de partie de toit (23) pendant le mouvement de la position d'ouverture à la position de fermeture.
